# EUROPÄISCHE PATENTSCHRIFT

(11) **EP 1 042 050 B1**
(45) Veröffentlichungstag und Bekanntmachung des Hinweises auf die Patenterteilung: **03.07.2002**
(21) Anmeldenummer: 98966558.3
(22) Anmeldetag: 18.12.1998
(51) Int. Cl.: B01D 53/26, F26B 21/08

(54) **VERFAHREN UND VORRICHTUNG ZUM TROCKNEN UND ERHITZEN VON LUFT ZUM TROCKNEN VON FESTSTOFFEN**
METHOD AND DEVICE FOR DRYING AND HEATING AIR TO DRY SOLID MATTER
PROCEDE ET DISPOSITIF DE SECHAGE ET DE RECHAUFFAGE DE L'AIR POUR LE SECHAGE DE MATIERES SOLIDES

(30) Priorität: 23.12.1997 DE 19757537
(43) Veröffentlichungstag der Anmeldung: 11.10.2000
(73) Patentinhaber: WITTMANN KUNSTSTOFFGERÄTE Ges.m.b.H., A-1220 Wien (AT)
(72) Erfinder: CRAMER, Susanne, D-58566 Kierspe (DE)
(74) Vertreter: Voigt, Günter, Dipl.-Ing.
(86) Internationale Anmeldenummer: DE9803729
(87) Internationale Veröffentlichungsnummer: WO9933546

(56) Entgegenhaltungen:
- DE-A- 3 625 013
- DE-C- 3 809 749
- FR-A- 2 739 918
- US-A- 4 974 337
- US-A- 5 335 426

## Beschreibung

Die Erfindung betrifft eine Vorrichtung zum Trocknen und Erhitzen von Luft zum Trocknen von Feststoffen, wie Pulver, Granulat, Schnipseln, Folien, Körnern, insbesondere von Kunststoffmaterialien, wobei der zur Trocknung erforderliche Luftstrom durch ein Trocknungsgebläse durch das Leitungssystem der Vorrichtung gedrückt wird, und die Vorrichtung im wesentlichen aus einer dem Trocknungsgebläse nachgeordneten Trockenpatrone, einem dieser nachgeordneten Lufterhitzer , einer diesem nachgeordneten Trockengutkammer oder -behälter, und einer dieser nachgeordneten Kühlvorrichtung besteht, die mit dem Trocknungsgebläse in Verbindung steht.

Desweiteren betrifft die Erfindung ein Verfahren zum Trocknen und Erhitzen von Luft zum Trocknen von Feststoffen, insbesondere mittels einer Vorrichtung gemäß einem der Ansprüche 1 bis 8, wobei der zur Trocknung erforderliche Luftstrom mittels eines Trocknungsgebläses in eine Trockenpatrone eingespeist wird, anschließend nach dem Austritt aus der Trockenpatrone erhitzt wird, nachfolgend in eine Trockengutkammer eingespeist wird, nach dem Austritt aus der Trockengutkammer gekühlt wird und dann wieder dem Trocknungsgebläse zugeführt wird.

Derartige Verfahren und Vorrichtungen sind im Stand der Technik vielfach bekannt. Es wird hierzu beispielsweise auf die DE AS 15 44 074 und DE-A-3 625 013 verwiesen.

Im Stand der Technik ist es üblich, daß beispielsweise die im geschlossenen Kreislauf geführte Luft beim Trocknungsvorgang mittels eines Trocknungsgebläses in die Trockenpatrone über ein Leitungssystem eingespeist wird. Dies führt dazu, daß die Luft, die in die Trockenpatrone eingespeist wird, noch relativ hohe Temperatur aufweist, weil das Trocknungsgebläse selbst Wärme erzeugt. Hierdurch wird die Effektivität des Trocknungsvorganges nachteilig beeinflußt.

Ausgehend von diesem Stand der Technik liegt der Erfindung die Aufgabe zugrunde, eine Vorrichtung gattungsgemäßer Art zu schaffen beziehungsweise ein Verfahren gattungsgemäßer Art zu schaffen, mit dem eine höhere Effektivität des Trocknungsvorganges und eine bessere Ausnutzung und Regeneration der Trockenpatrone gewährleistet ist.

Zur Lösung dieser Aufgabe wird eine Vorrichtung gemäß Anspruch 1 und ein Verfahren gemäß Anspruch 8 vorgeschlagen.

Bevorzugt ist dabei vorgesehen, daß mittels der weiteren Kühlvorrichtung eine Kühlung des Luftstromes auf unter 30 ° Celsius erfolgt.

Verfahrensmäßig ist dazu bevorzugt, daß die Luft nach Verlassen des Trocknungsgebläses und vor dem Eintritt in die Trocknerpatrone auf eine Temperatur von unter 30 ° Celsius gekühlt wird.

Zusätzlich kann vorrichtungsmäßig vorgesehen sein, daß vor die Kühlvorrichtung ein Staubfilter eingeschaltet ist.

Verfahrensmäßig kann zusätzlich vorgesehen sein, daß die Luft nach Verlassen der Trocknerpatrone zunächst gefiltert wird und dann vor Erreichen des Trocknungsgebläses gekühlt wird.

Sofern die Vorrichtung oder das Verfahren mit einem offenen Kreislauf betrieben wird, wird die Vorrichtung als offenes System betrieben, wobei das Trocknungsgebläse eingangsseitig direkt oder über die Kühlvorrichtung an Umgebungsluft angeschlossen ist und der Ausgang von Trockengutkammer beziehungsweise - behälter mit der Umgebungsatmosphäre in Verbindung steht.

Verfahrensmäßig ist analog vorgesehen, daß mittels des Trocknungsgebläses Umgebungsluft unmittelbar oder gekühlt angesaugt wird und die Luft nach Verlassen der Trocknungskammer an die Umgebung abgegeben wird.

Bevorzugt ist dabei vorrichtungsmäßig vorgesehen, daß im Luftausgang der Trockenpatrone ein Temperaturfühler angeordnet ist, mittels dessen die Umschaltung von der Aufheizphase auf die Kühlphase der Regeneration initiiert wird, wobei dem Umschaltvorgang ein Verzögerungsmittel überlagert ist, durch das die Aufheizphase über einige Minuten nach Erreichen der Aufheizsolltemperatur beibehalten bleibt.

Verfahrensmäßig ist bevorzugt vorgesehen, daß die Lufttemperatur am Ausgang der Trocknerpatrone gemessen wird, und bei Erreichen einer Solltemperatur des in der Regenerationsphase betriebenen offenen Kreislaufes auf den geschlossenen Kühlkreislauf in Abhängigkeit von der erfaßten Temperatur umgeschaltet wird, wobei die Umschaltung erst einige Minuten nach Erreichen der die Regeneration indizierenden Temperatur verzögert erfolgt.

Desweiteren kann bevorzugt vorgesehen sein, daß die Trocknerpatrone nach Erreichen der Abkühlsolltemperatur mittels Schiebern oder dergleichen Sperrmitteln eingangs- und ausgangsseitig hermetisch absperrbar ist.

Verfahrensmäßig ist bevorzugt vorgesehen, daß die Abkühlsolltemperatur am Ausgang der Trocknerpatrone erfaßt wird und bei Erreichen dieser Temperatur die Trocknerpatrone hermetisch geschlossen wird, bis sie erneut in den Trocknungskreis eingeschaltet wird.

Zusätzlich kann bevorzugt vorgesehen sein, daß das Volumen der vollständig oder annähernd vollständig mit Trockenmittel gefüllten Trockenpatrone in der Weise auf die Menge durchströmender Luft pro Stünde (beim Trocknungsvorgang) abgestimmt ist, daß pro Kubikmeter der pro Stunde durchströmenden Luft mindestens ein Volumen von 1 Liter der Trockenpatrone zur Verfügung steht.

Verfahrensmäßig ist analog vorgesehen, daß das Volumen der vollständig oder annähernd vollständig mit Trockenmittel gefüllten Trockenpatrone in der Weise auf die Menge durchströmender Luft pro Stunde (beim Trocknungsvorgang) abgestimmt ist, daß pro Kubikmeter der pro Stunde durchströmenden Luft mindestens ein Volumen von 1 Liter der Trockenpatrone zur Verfügung steht.

Durch die Erfindung wird eine Vorrichtung und ein Verfahren zur Verfügung gestellt, bei dem der Trockenlufterzeuger Trockenluft mit einem extrem niedrigen Taupunkt erzeugt, mittels dessen Feststoffe mit molekulargebundener Feuchte oder mit anhaftender Oberflächenfeuchte in kürzester Zeit auf sehr niedrige Restfeuchten heruntergetrocknet werden können. Die Feststoffe können bei Bedarf auf so niedrige Restfeuchten heruntergetrocknet werden; daß bei der weiteren Verarbeitung zum einen keine durch Feuchtigkeitsgehalt ausgelösten Schädigungen des Endproduktes entstehen, zum anderen aber auch eine durch Feuchtegehalt häufig verzögerte Materialverarbeitung beschleunigt wird. Dabei ist vor einer Verpackung des getrockneten Feststoffes dieser so trocken, daß innerhalb einer Verpackung keine Kondensfeuchte oder Fäule entstehen kann.

Bei der erfindungsgemäßen Vorrichtung beziehungsweise dem erfindungsgemäßen Verfahren wird in der Trockenpatrone Zeolich als Trockenmittel eingesetzt.

Während des Trocknungsvorganges wird gemäß der Erfindung die Trockenpatrone mit möglichst kalter Luft vorzugsweise unter 30 ° Celsius beaufschlagt, wobei durch die dem Trockengebläse nachgeschaltete Kühlung gewährleistet ist, daß die durch das Gebläse erzeugte Wärme vor Eintritt der Luft in die Trockenpatrone abgeführt wird.

Während der Aufheizphase der Regeneration der Trockenpatrone wird die in der angesaugten Außenluft enthaltene Feuchte vor Eintritt in die Trockenpatrone weitestgehenst durch Kondensation ausgeschieden. Während der Abkühlphase der Regeneration läuft die Luft im geschlossenen Kreislauf um und wird zusätzlich heruntergekühlt, wobei zusätzlich das den Luftstrom erzeugende Gebläse vor Überhitzung geschützt wird. Die Temperatur während der Aufheizphase der Regeneration ist genau erfaßbar und auch definiert. Sie wird im Austritt der Trockenpatrone gemessen und nach Erreichen der Solltemperatur für eine Haltezeit, die je nach Volumen der Trockenpatrone für mindestens drei Minuten nach deren Erreichen gehalten wird, konstant gehalten. Auch wird die Temperatur während der Abkühlphase der Regeneration am Austritt der Trockenpatrone gemessen, wobei diese Temperatur das Erreichen der Beendigung der Regenerationsphase indiziert.

In der Zeichnung ist ein Ausführungsbeispiel für eine Vorrichtung und der Verfahrensablauf analog der Erfindung beschrieben. Es zeigt:

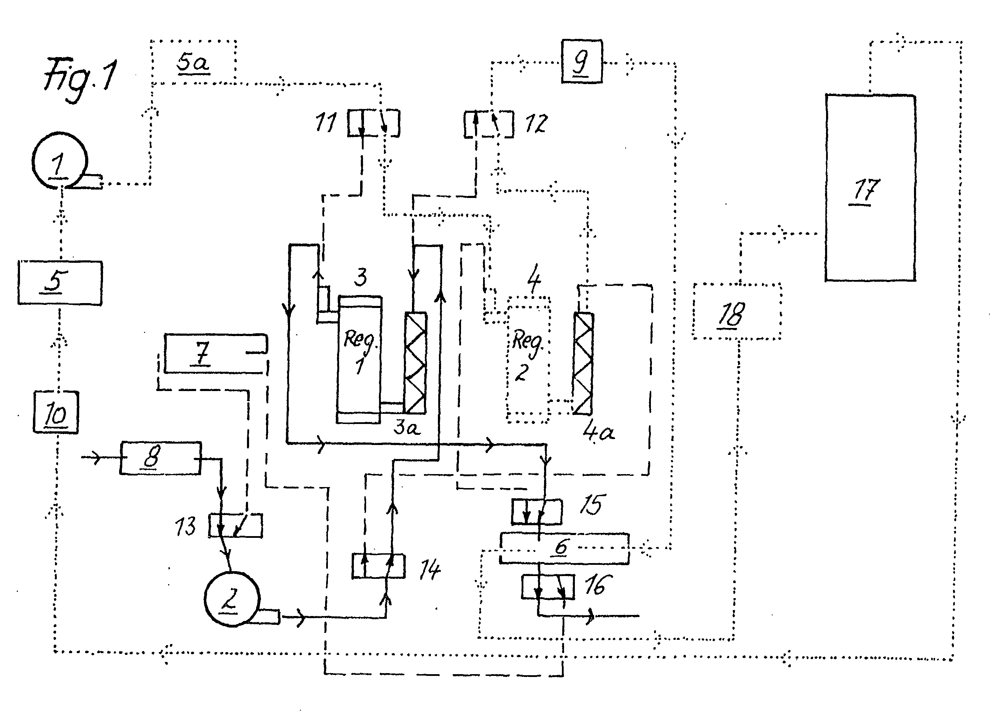

- Figur 1: eine Vorrichtung zum Trocknen und Erhitzen von Luft während des Trocknungsprozesses und während der Regeneration;

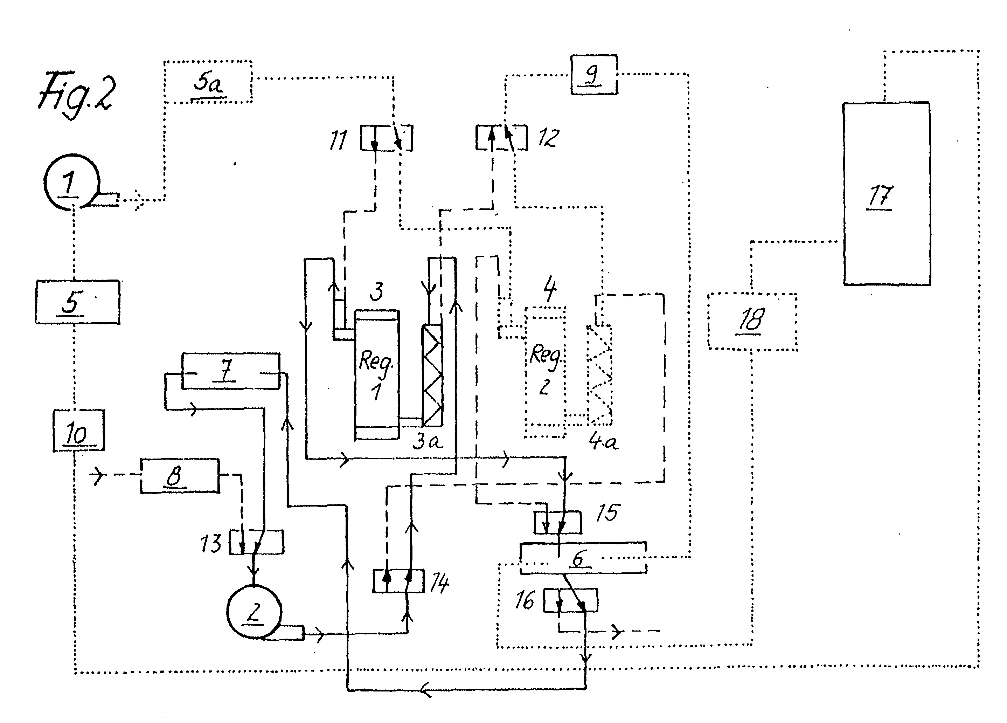

- Figur 2: desgleichen während des Trocknungsprozesses und in der Abkühlphase.

Die Bezugszeichen gemäß zeichnerischer Darstellung sind nachstehend erläutert. Mit 1 ist ein Trockengebläse für den Adsorptionsprozeß bezeichnet.

Mit 2 ist ein Gebläse für den Reaktivierungsprozeß gezeigt. Mit 3 ist eine Trockenpatrone, mit 3 a eine Reaktivierungsheizung für die Trockenpatrone 3, mit 4 eine zweite Trockenpatrone und mit 4 a eine Reaktivierungsheizung für die zweite Trockenpatrone 4 gezeigt. Mit 5 ist eine Rückluftkühlung für Rückluft aus dem Trockengutbehälter 17 gezeigt. Diese dient zur Rückkühlung der Abluft aus dem Trockengutbehälter 17, die je nach Art der Trocknung, zum Beispiel Batch-Trocknung und Höhe der geforderten Trockentemperatur sehr hoch sein kann, zum Teil um 200 ° Celsius. Der Rückluftkühler 5 kann auch als Wärmetauscher ausgeführt werden, so daß die gewonnene Wärme noch für andere Prozeßvorgänge zur Verfügung steht. Die Rückkühlung erfolgt im geschlossenen Kreislauf der Adsorptionsphase, damit die im Kreislauf nachfolgenden Trockenpatronen mit möglichst kalter Luft beaufschlagt werden, um so einen sehr niedrigen Taupunkt zu erreichen.

Mit 5 a ist ein Nachkühler bezeichnet, mittels dessen die Adsorptionsluft nach dem Adsorptionsgebläse 1 herunter gekühlt wird, insbesondere um die durch das Gebläse erzeugte Verdichtungstemperatur abzuziehen.

Mit 6 ist ein Luft/Luft-Wärmetauscher bezeichnet. Hier kann die aus dem Reaktivierungsprozeß stammende Wärme auf die Luft übertragen werden, die dem Trockengutbehälter 17 zugeführt wird.

Mit 7 ist ein Umluftwasserkühler für die Kühlung der Trockenpatrone im geschlossenen Kreislauf gezeigt. Der Kühler dient zur schnellen Abkühlung während der Reaktivierungsphase im geschlossenen Kreislauf, so daß keine Umgebungsluft angesaugt werden muß und die Trockenpatrone ab Erreichen der maximalen Aufnahmetemperatur während der Reaktivierungsphase keine Feuchtigkeit aufnehmen kann. Dies führt im Ergebnis dazu, daß die gerade reaktivierte Patrone, wenn sie nach ihrer Stand-by-Zeit in den Adsorptionsprozeß eingebunden wird, absolut trocken und unbelastet ist, da sie während der Reaktivierungsphase keine Feuchtigkeit aufnehmen kann.

Mit 8 ist ein Ansaugwasserkühler mit Kondensatabscheider für Reaktivierungsluft in der Heizphase gezeigt. Er dient zum Abscheiden von Feuchte aus der angesaugten Außenluft, um während der Heizphase der Reaktivierung möglichst wenig zusätzliche Feuchte in die Patrone einzusaugen, insbesondere während die Patrone in den unteren Temperaturbereichen noch aufnahmefähig ist.

Das macht die Reaktivierungsphase unabhängig von äußeren Bedingungen, wie beispielsweise der Luftfeuchte.

Mit 9 ist ein Staubfilter zum Ausfiltern von Feinstaub aus dem Trockenmittel in den Trockenpatronen 3 beziehungsweise 4 gezeigt. Mit 10 ist ein Staubfilter zum Ausfiltern von Feinstaub aus dem Trockengut Luftstrom gezeigt. Dieser dient dazu, den Eintritt von Kunststoffstaub oder Additiven oder dergleichen in die Trockenpatronen 3 beziehungsweise 4 zu verhindern, wodurch die Molekularsiebe verklebt werden könnten.

Mit 11 ist ein Strömungswechsler für den Adsorptionskreislauf (Eintritt in Patrone 3 beziehungsweise Patrone 4) gezeigt. Mit 12 ist ein Strömungswechsler für den Adsorptionskreislauf zum Trockengutbehälter aus Patrone 3/Patrone 4 gezeigt.

Mit 13 ist ein Strömungswechsler für die Reaktivierungsphase (Heizen offen/Kühlen geschlossen) gezeigt. Mit 14 ist ein Strömungswechsler für die Reaktivierungsphase (Patrone 3/4 ) gezeigt. Mit 15 ist ein Stromungswechsler für die Reaktivierungsphase Abluft zu Wärmetauscher aus Patrone 3/ Patrone 4 gezeigt. Mit 16 ist ein Strömungswechsler für die Reaktivierungsphase nach Wärmetauscher Abluft Heizen/Umluft Kühlen gezeigt.

Mit 17 ist ein Trockengutbehälter bezeichnet. Mit 18 eine Trockenheizung.

Die Vorrichtung wird wie folgt betrieben. In dem Trockenlufterzeuger finden zwei voneinander getrennte Prozesse statt. Zum einen ist dies der eigentliche Trocknungsprozeß, währenddessen in einer von zwei Trockenpatronen trockene Luft zur Trocknung eines Feststoffes erzeugt wird und zum anderen der Regenerationsprozeß, im Verlaufe dessen die von der Patrone während der Trocknung aufgenommene Feuchte wieder ausgetragen wird.

Der zur Trocknung notwendige Luftstrom wird durch das Trocknungsgebläse 1 erzeugt, welches diesen nachfolgend durch das gesamte Leitungssystem drückt. Dem Gebläse 1 ist im System nachfolgend ein fremdenergiebetriebener Kühler 5 a nachgeschaltet, der bewirkt, daß die Luft bei Eintritt in die jeweils in den Trocknungsprozeß eingebundene Trockenpatrone 3 oder 4 nicht wärmer als 30 ° Celsius ist.

Nach dem Kühler 5 a ist im weiteren Verlauf des Systems ein Strömungswechsler 11 installiert, der den Luftstrom in die jeweils in den Trockenkreislauf eingebundene Trockenpatrone 3 oder. 4 lenkt. In den Trockenpatronen ist keramisches Zeolith enthalten, welches in einer Mindestmenge von 1 Liter pro Kubikmeter pro Stunde durch das Gebläse 1 erzeugter Luft im System jeder Trockenpatrone 3 oder 4 enthalten ist. Das entsprechende Verhältnis von Trockenmittelmenge zu Luftdurchsatz bewirkt in Verbindung mit der oben definierten Eintrittstemperatur der Luft bei Eintritt in die Trockenpatrone 3 oder 4 einen Taupunkt der Luft von mindestens -60 ° bis -100 ° Celsius. Nach ihrem Austritt aus der jeweils in den Trocknungsprozeß eingebundenen Trockenpatrone 3 oder 4 wird der Luftstrom vermittels des Strömungswechslers 12 über einen Lufterhitzer 18 geführt, der die Luft auf die zur Trocknung des jeweils im Trockenbehältnis 17 befindlichen Feststoffes benötigte Temperatur aufheizt. Im Trockenbehältnis 17 oder in mehreren angeschlossenen entsprechenden Trockenbehältnissen durchströmt die getrocknete Luft den darin befindlichen Feststoff und entzieht diesem durch ihren niedrigen Dampfdrucktaupunkt sowohl dessen molekular gebundene Feuchte als auch die demselben anhaftende Oberflächenfeuchte. Aus dem Trockenbehältnis 17 tritt die Luft mit der dem in diesem beinhalteten Feststoff entzogenen Feuchtigkeit beladen aus. Nach Austritt aus dem Trockenbehältnis 17 durchströmt die nun feuchtigkeitsbeladene und heiße Luft den fremdenergiebetriebenen Kühler 5, der diese herunterkühlt auf eine Temperatur, die zur Durchströmung der Patronen 3 oder 4 geeignet ist. Durch Kondensation wird dabei bereits eine große Menge der enthaltenen Feuchte abgeschieden. Eventuell im zu trocknenden Feststoff enthaltene Schadstoffe können als Kondensat umweltgerecht entfernt werden. Zusätzlich kann ein Staubfilter 10 vorgeschaltet sein. Alternativ kann der Staubfilter 10 auch dem Rückluftkühler 5 nachgeschaltet sein. Der Filter 10 dient dazu, das Gebläse 1 und auch das Trockenmittel in den Trockenpatronen 3 oder 4 von Staub oder dergleichen freizuhalten. Nach dem Austritt aus dem Rückluftkühler 5 wird die Luft durch das Gebläse 1 erneut in den oben beschriebenen Prozeß geblasen.

Der beschriebene Trocknungsprozeß über eine der Trockenpatronen 3 oder 4, endet, wenn der in der jeweiligen Trocknungspatrone 3 oder 4 erzeugte niedrige Drucktaupunkt überschritten wird. Ein installiertes Taupunktmeßgerät kann dazu genutzt werden, eine Umlenkung des Luftstromes vermittels des Strömungswechslers 11 auszulösen, so daß dann die jeweils andere Trockenpatrone 3 oder 4 in den Trocknungsprozeß eingebunden ist.

Der Prozeß findet in dem beschriebenen Ablauf im geschlossenen Kreislauf statt. Alternativ ist es aber auch möglich, die feuchtigkeitsbeladene Luft nach dem Austritt aus dem Trocknungsbehälter 17 an die Atmosphäre abzugeben. In diesem Falle kann das Trockengebläse 1 vorzugsweise über einen Filter aus der Atmosphäre Außenluft zur Trocknung im oben beschriebenen Prozeß ansaugen. Bei heißer oder feuchter Außenluft kann auch eine Kühlung 5 vorgeschaltet sein, die dann die erste Komponente im Trocknungsprozeß ist.

Zeitlich zum Teil überlagert (parallel) zum beschriebenen Trocknungsprozeß findet über jeweils eine der Trockenpatronen 3 oder 4 ein Regenerationsprozeß der bereits feuchtigkeitsbeladenen Trockenpatrone 3 oder 4 statt. Im Verlaufe dieses Prozeßes wird die Feuchte, die die Trockenpatrone während des Trocknungsprozesses aufgenommen hat, wieder ausgetragen. Die Regeneration teilt sich in zwei aufeinanderfolgende Phasen auf, nämlich eine Aufheiz- und Haltephase sowie eine Kühlphase.

In der Aufheiz- und Haltephase saugt das Gebläse 2 vorzugsweise über einen Staubfilter und einen Ansaugluftkühler 8 mit Kondensatabscheider Außenluft aus der Atmosphäre an und bläst diese über den Strömungswechsler 14 über einen durch einen Temperaturregler geregelten Elektrolufterhitzer (Heizung 3 a beziehungsweise 4 a) und dann in die jeweilige zu regenerierende Patrone 3 oder 4. Am Luftaustritt der jeweiligen Trockenpatrone 3 oder 4 ist ein Temperaturfühler installiert, der indiziert, wenn die definierte Aufheiztemperatur erreicht ist. Nach deren Erreichen läuft eine zeitlich definierte Temperaturhaltephase ab, die mindestens drei Minuten beträgt. Nach Ablauf dieses Zeitraumes schaltet die Heizung 3 a beziehungsweise 4 a ab. Die Aufheiz- und Haltephase ist damit beendet. Danach beginnt die Abkühiphase, die im geschlossenen Kreislauf abläuft. Dabei wird der Strömungswechsler 13 umgestellt, so daß eine Luftführung im geschlossenen Kreislauf erreicht wird. Der Luftstrom wird durch das Gebläse 2 erzeugt und über den Strömungswechsler 14, die abgeschaltete Heizung 3 a oder 4 a in die zu kühlende Trockenpatrone 3 oder 4 eingeblasen. Nach Verlassen der Trockenpatrone 3 oder 4 läuft der Luftstrom über den Strömungswechsler 15 zu dem Kühler (Luftwärmetauscher) 6 den Strömungswechsler 16 und einen Umluftwasserkühler 7 wieder zum Gebläse 2 hin.

In der Regenerierphase (Aufheiz- und Haltephase) wird die aus der Trockenpatrone 3 oder 4 abströmende, mit Feuchtigkeit beladene Luft über den Strömungswechsler 15 einen Luftwärmecauscher 6 zugeführt, der von dem Trockenluftstrom zur Trockenkammer 17 durchströmt wird und dann über einen weiteren Strömungswechsler 16 an Abluft abgegeben.

In der zeichnerischen Darstellung ist jeweils der Trocknungsprozeß mit punktierten Linien, der Reaktivierungs- und Regenerationsprozeß mit durchgezogenen Linien und der im jeweiligen Zustand stillgelegte Bereich mit gestrichelten Linien gezeigt.

Durch die erfindungsgemäße Anordnung und Verfahrensweise wird eine optimale Trocknung von Feststoffen in kürzester Zeit auf geringste Restfeuchte durch trockene Luft mit einem extrem niedrigen Drucktaupunkt von mindestens -60 ° Celsius erreicht. Dabei hat die Luft bei Eintritt in die Trockenpatrone eine möglichst niedrige Temperatur von unter 30 ° Celsius, was insbesondere durch die dem Trockengebläse 1 nachgeordnete Kühlung 5 a erreicht wird, die auch die durch das Trockengebläse 1 erzeugte Wärme wieder herunterkühlt, sowie durch die während des Regenerationsvorganges extrem getrockneten Trocknerpatronen 3 oder 4, welche während der Aufheiz- und Haltephase in der Regeneration sehr hoch aufgeheizt werden, auf eine definierte Temperatur, die zur absoluten Austrocknung noch für mehrere Minuten gehalten wird. Dabei wird die durch das Gebläse 2 gesaugte Außenluft gekühlt und durch Kondensation während der Aufheiz- und Haltephase vor Eintritt in die zu regenierende Trockenpatrone weitestgehend entfeuchtet wird. Zusätzlich wird während der Abkühlphase der Regeneration im geschlossenen Kreislauf gekühlt, um so während der Abkühlung die eventuelle Neuaufnahme von Feuchtigkeit aus der Außenluft zu verhindern. Es wird somit eine praktisch absolute Trockenheit der Trockenpatrone 3 beziehungsweise 4 bei späterer Einbindung in den Trockenkreislauf garantiert, wobei nach Abschluß der Abkühlphase die regenierte Trockenpatrone durch Schieber oder dergleichen hermetisch abgeschlossen sein kann und erst wieder geöffnet wird, wenn sie in den Trockenkreislauf integriert wird.

Die Erfindung ist nicht auf das Ausführungsbeispiel beschränkt.

## Patentansprüche

1. Vorrichtung zum Trocknen und Erhitzen von Luft zum Trocknen von Feststoffen, wie Pulver, Granulat, Schnipseln, Folien, Körnern, insbesondere von Kunststoffmaterialien, wobei der zur Trocknung erforderliche Luftstrom durch ein Trocknungsgebläse (1) durch das Leitungssystem der Vorrichtung gedrückt wird, und die Vorrichtung im wesentlichen aus einer dem Trocknungsgebläse (1) nachgeordneten Trockenpatrone (3 oder 4), einem dieser machgeordneten Lufterhitzer (18), einer diesem nachgeordneten Trockengutkammer oder einem -behälter (17), einer mit dem Trocknungsgebläse verbundenen, der Trockengutkammer nachgeordneten Kühlvorrichtung (5, 5a) besteht, wobei die Trocknorpatrone (3 oder 4) zum Zwecke der Regeneration in einen Regenerationskreislauf einschaltbar ist, der in Strömungsrichtung vor der Trocknerpatrone (3 oder 4) aus einem zur Umgebungsluft offenen Ansaugkühler (8) mit Kondensatabscheider, einem Gebläse (2) und einer Heizvorrichtung (3a oder 4a) besteht, und wobei der Trocknerpatrone (3 oder 4) ein Abluftabgang nachgeschaltet ist, wobei ferner Strömungswechsler vorgesehen sind, die den offenen Kreislauf in einen geschlossenen Kühlkreislauf zur Kühlung der schon regenerierten Trocknerpatrone umschalten, wobei beim Kühlkreislauf die Trocknerpatrone (3 oder 4) nicht mit dem Abluftabgang, sondern mit dem Eingang des Gebläses (2) in Verbindung steht, dessen zur Umgebungsluft offener Eingang gesperrt ist, wobei in den aus der Trocknerpatrone (3 oder 4) abgehenden Teilkreislauf vor das Gebläse (2) der Ansaugkühler (8) oder ein alternativer Kühler (7) eingeschaltet und die Heizvorrichtung (3a oder 4a) abgeschaltet ist.

2. Vorrichtung nach Anspruch 1, **dadurch gekennzeichnet, dass** eine dem Trocknungsgebläse nachgeordnete Kühlvorrichtung (5a) vorgesehen ist, mittels welcher eine Kühlung des Luftstromes auf unter 30 ° Celsius erfolgt.

3. Vorrichtung nach Anspruch 1 oder 2, **dadurch gekennzeichnet, dass** vor das Trocknungsgebläse eine Kühlvorrichtung (5) und ein Staubfilter (10) eingeschaltet ist.

4. Vorrichtung nach einem der Ansprüche 1 bis 3, **dadurch gekennzeichnet, dass** die Vorrichtung als offenes System betrieben ist, wobei das Trocknungsgebläse (1) eingangsseitig direkt oder über die Kühlvorrichtung (5) an Umgebungsluft angeschlossen ist und der Ausgang von Trockengutkammer beziehungsweise -behälter (17) mit der Umgebungsatmosphäre in Verbindung steht.

5. Vorrichtung nach Anspruch 4, **dadurch gekennzeichnet, dass** im Luftausgang der Trockenpatrone (3 oder 4) ein Temperaturfühler angeordnet ist, mittels dessen die Umschaltung von der Aufheizphase auf die Kühlphase der Regeneration initiiert wird, wobei dem Umschaltvorgang ein Verzögerungsmittel überlagert ist, durch das die Aufheizphase über einige Minuten nach Erreichen der Aufheizsolltemperatur beibehalten bleibt.

6. Vorrichtung nach Anspruch 4 oder 5, **dadurch gekennzeichnet, dass** die Trocknerpatrone (3 oder 4) nach Erreichen der Abkühlsolltemperatur mittels Schiebern oder dergleichen Sperrmitteln eingangs- und ausgangsseitig hermetisch absperrbar ist.

7. Vorrichtung nach einem der Ansprüche 1 bis 6, **dadurch gekennzeichnet, dass** das Volumen der vollständig oder annähernd vollständig mit Trockenmittel gefüllten Trockenpatrone (3 oder 4) in der Weise auf die Menge durchströmender Luft pro Stunde beim Trocknungsvorgang abgestimmt ist, dass pro Kubikmeter der pro Stunde durchströmenden Luft mindestens ein Volumen von 1 Liter der Trockenpatrone zur Verfügung steht.

8. Verfahren zum Trocknen und Erhitzen von Luft zum Trocknen von Feststoffen, insbesondere mittels einer Vorrichtung gemäß einem der Ansprüche 1 bis 7, wobei der zur Trocknung erforderliche Luftstrom mittels eines Trocknungsgebläses (1) in eine Trocknerpatrone (3 oder 4) eingespeist wird, anschließend nach dem Austritt aus der Trockenpatrone (3 oder 4) erhitzt wird, nachfolgend in eine Trockengutkammer (17) eingespeist wird, nach dem Austritt aus der Trockengutkammer (17) gekühlt wird und dann wieder dem Trocknungsgebläse (1) zugeführt wird, wobei die Luft nach dem Trocknungsgebläse und vor dem Eintritt in die Trocknerpatrone (3 oder 4) gekühlt wird; zum Zwecke der Regeneration der Trocknerpatrone (3 oder 4) in die Trocknerpatrone (3 oder 4) Umgebungsluft über einen Ansaugkühler (8) mit Kondensatabscheider angesaugt und mittels eines Gebläses (2) in eine Heizvorrichtung eingespeist wird, die erhitzte Luft in die Trocknerpatrone (3 oder 4) eingespeist und nach Verlassen der Trocknerpatrone (3 oder 4) an die Umgebung abgegeben wird, wobei dieser offene Kreislauf nach Erreichen der Reaktivierungstemperatur in einen geschlossenen Kühlkreislauf zur Kühlung der schon regenerierten Trocknerpatrone (3 oder 4) umgeschaltet wird, bei dem die die Trocknerpatrone (3 oder 4) verlassende Luft in das Gebläse (2) eingesaugt wird, das zur Umgebungsluft abgesperrt wird, und der die Trocknerpatrone (3 oder 4) verlassende Luftstom vor dem Gebläse gekühlt wird und zu Beginn der Kühlphase die Beheizung in der Herzvorrichtung ausgeschaltet wird.

9. Verfahren nach Anspruch 8, **dadurch gekennzeichnet, dass** die Luft nach Verlassen des Trocknungsgebläses (1) und vor dem Eintritt in die Trocknerpatrone (3 oder 4) auf eine Temperatur von unter 30 ° Celsius gekühlt wird.

10. Verfahren nach Anspruch 8 oder 9, **dadurch gekennzeichnet, dass** die Luft nach Verlassen der Trocknerpatrone zunächst gefiltert und dann vor Erreichen des Trocknungsgebläses (1) gekühlt wird

11. Verfahren nach einem der Ansprüche 8 bis 10, **dadurch gekennzeichnet, daß** mittels des Trocknungsgebläses (1) Umgebungsluft unmittelbar oder gekühlt angesaugt wird und die Luft nach Verlassen der Trocknungskammer (1) an die Umgebung abgegeben wird.

12. Verfahren nach Anspruch 11, **dadurch gekennzeichnet, dass** die Lufttemperatur am Ausgang der Trocknerpatrone (3 oder 4) gemessen wird, und bei Erreichen einer Solltemperatur des in der Regenerationsphase betriebenen offenen Kreislaufes auf den geschlossenen Kühlkreislauf in Abhängigkeit von der erfaßten Temperatur umgeschaltet wird, wobei die Umschaltung erst einige Minuten nach Erreichen der die Regeneration indizierenden Temperatur verzögert erfolgt.

13. Verfahren nach Anspruch 11 oder 12, **dadurch gekennzeichnet, dass** die Abkühltemperatur am Ausgang der Trocknerpatrone (3 oder 4) erfaßt wird und bei Erreichen dieser Temperatur die Trocknerpatrone hermetisch geschlossen wird, bis sie erneut in den Trocknungskreis eingeschaltet wird.

14. Verfahren nach einem der Ansprüche 8 bis 13,
**dadurch gekennzeichnet, daß** das Volumen der mit Trockenmittel gefüllten Trocknerpatrone (3 oder 4) so auf die Menge der beim Trocknungsvorgang pro Stunde durchströmenden Luftmenge abgestimmt wird, daß pro Kubilmeter und Stunde mindestens ein Liter Trockenmittel zur Verfügung steht.

## Claims

1. Device for drying and heating air for drying solid materials, such as powder, granulate, chips, films and grains, particularly of plastics materials, wherein the air flow required for drying is forced by a drying blower (1) through the guide system of the device and the device substantially consists of a drying cartridge (3 or 4) arranged downstream of the drying blower (1), an air heater (18) arranged downstream of the cartridge, a drying material chamber or a drying material container (17) arranged downstream of the heater, and a cooling device (5, 5a) connected with the drying blower and arranged downstream of the drying material chamber, wherein for the purpose of regeneration the drier cartridge (3 or 4) is connectible into a regeneration circuit which in flow direction in front of the drier cartridge (3 or 4) consists of an intake cooler (8) open to the ambient air with condensate separator, a blower (2) and a heating device (3a or 4a), wherein an exhaust air outlet is connected downstream of the drier cartridge (3 or 4), wherein in addition a flow changer is provided, which switches over the open circuit into a closed cooling circuit for cooling the already regenerated drier cartridge, wherein in the case of the cooling circuit the drier cartridge (3 or 4) is connected not with the exhaust air outlet, but with the inlet of the blower (2), the inlet of which open to the ambient air is closed, wherein the intake cooler (8) or an alternative cooler (7) is connected into and the heating device (3a or 4a) disconnected from the circuit part, which leads out of the drier cartridge (3 or 4), ahead of the blower 2.

2. Device according to claim 1, **characterised in that** a cooling device (5a) arranged downstream of the drying blower is provided, by means of which cooling device a cooling of the air flow to below 30° Celsius takes place.

3. Device according to claim 1 or 2, **characterised in that** a cooling device (5) and a dust filter (10) are connected in front of the drying blower.

4. Device according to one of claims 1 to 3, **characterised in that** the device is operated as an open system, wherein the drying blower (1) is connected at the inlet side with the ambient air directly or by way of the cooling device and the outlet of the drying material chamber or drying material container (17) is connected with the ambient atmosphere.

5. Device according to claim 4, **characterised in that** a temperature sensor is arranged in the air outlet of the drier cartridge (3 or 4), by means of which sensor the switching over from the heating phase to the cooling phase of the regeneration is initiated, wherein a delay means, by which the heating phase is maintained for a few minutes after attainment of the target heating-up temperature, is superimposed on the switching-over process.

6. Device according to claim 4 or 5, **characterised in that** the drier cartridge (3 or 4) can be hermetically blocked at the inlet side and the outlet side after attainment of the target cooling-down temperature.

7. Device according to one of claims 1 to 6, **characterised in that** the volume of the drying cartridge (3 or 4) completely or approximately completely filled with drying medium is matched to the amount of air flowing through per hour in the drying process in such a manner that a volume of at least one litre of the drying cartridge is available per cubic metre of the air flowing through per hour.

8. Method for drying and heating air for the drying of solid materials, particularly by means of a device according to one of claims 1 to 7, wherein the air flow required for the drying is supplied by means of a drying blower (1) to a drier cartridge (3 or 4), subsequently is heated after exit from the drying cartridge (3 or 4), then is supplied to a drying material chamber (17), is cooled after exit from the drying material chamber (17) and then fed back to the drying blower (1), wherein the air is cooled after the drying blower and before entry into the drier cartridge (3 or 4); ambient air is for the purpose of regeneration of the drier cartridge (3 or 4) sucked into the drier cartridge (3 or 4) by way of an intake cooler (8) with condensate separator and is supplied by means of a blower (2) to a heating device, the heated air is supplied to the drier cartridge (3 or 4) and delivered to the environment after leaving the drier cartridge (3 or 4), wherein this open circuit after attainment of the reactivation temperature is switched over to a closed cooling circuit for cooling of the already regenerated drier cartridge (3 or 4), in the case of which the air leaving the drier cartridge (3 or 4) is sucked into the blower (2), which is blocked relative to ambient air, and the air flow leaving the drier cartridge (3 or 4) is cooled ahead of the blower and the heating in the heating device is switched off at the beginning of the cooling phase.

9. Method according to claim 8, **characterised in that** the air is cooled to a temperature of below 30°C after leaving the drying blower (1) and before entry into the drier cartridge (3 or 4).

10. Method according to claim 8 or 9, **characterised in that** the air is initially filtered after leaving the drier cartridge and then is cooled before reaching the drying blower (1).

11. Method according to one of claims 8 to 10, **characterised in that** ambient air is sucked by means of the drying blower (1) directly or cooled and the air is delivered to the environment after leaving the drying chamber (1).

12. Method according to claim 11, **characterised in that** the air temperature is measured at the outlet of the drier cartridge (3 or 4) and on attainment of a target temperature the open circuit operated in the regeneration phase is switched over to the closed cooling circuit in dependence on the detected temperature, wherein the switching over only takes place with a delay of a few minutes after attainment of the temperature indicating the regeneration.

13. Method according to claim 11 or 12, **characterised in that** the cooling-down temperature is detected at the outlet of the drier cartridge (3 or 4) and on attainment of this temperature the drier cartridge is hermetically closed until it is again connected into the drying circuit.

14. Method according to one of claims 8 to 13, **characterised in that** the volume of the drying cartridge (3 or 4) filled with drying medium is so matched to the amount of air flowing through per hour in the drying process that at least one litre of drying medium is available per cubic metre and hour.

## Revendications

1. Dispositif pour le séchage et le chauffage de l'air en vue de sécher des substances solides, telles que des poudres, des granulats, des confettis, des feuilles, des grains, en particulier de matière synthétique, le flux d'air nécessaire au séchage étant acheminé sous pression à travers un système de conduits au moyen d'une soufflante de séchage (1) et le dispositif étant composé pour l'essentiel d'une cartouche de séchage (3) ou (4), d'un réchauffeur d'air (18), d'une chambre ou d'un récipient (17) pour le produit sec, d'un dispositif de refroidissement (5), (5a) relié au récipient à produit sec (17), ces éléments étant disposés en série l'un derrière l'autre en aval de la soufflante de séchage (1), étant précisé que
- en vue de sa régénération, la cartouche de séchage (3) ou (4) peut être connectée à un circuit de régénération qui est disposé, en direction du flux, en amont de la cartouche de séchage (3) ou (4) et qui se compose d'un radiateur aspirant de refroidissement (8) ouvert vers le milieu ambiant et équipé d'un séparateur de condensat, d'une soufflante (2), et, d'un appareil de chauffage (3a) ou (4a),
- un manche de sortie d'air est disposé en aval de la cartouche de séchage (3) ou (4),
- des dispositifs d'inversion du flux commutent le circuit ouvert en circuit fermé de refroidissement en vue du refroidissement de la cartouche de séchage déjà régénérée,
- dans le circuit de refroidissement, la cartouche de séchage (3) ou (4) n'est pas reliée au manche de sortie d'air mais à l'entrée de la soufflante (2), ladite entrée ouverte vers le milieu ambiant étant fermée,
- le radiateur aspirant de refroidissement (8) ou un radiateur de refroidissement (7) alternatif est inséré dans la partie du circuit partant de la cartouche de séchage (3) ou (4) en amont de la soufflante (2), le dispositif de chauffage (3a) ou (4a) étant mis hors circuit.

2. Dispositif selon la revendication 1 **caractérisé par** un dispositif de refroidissement (5c) placé en aval de la soufflante de séchage, au moyen duquel est effectué un refroidissement du flux d'air à moins de 30° C.

3. Dispositif selon les revendications 1 ou 2 **caractérisé en ce que** un dispositif de refroidissement (5) et un filtre à poussière (10) sont insérés en amont de la soufflante de séchage.

4. Dispositif selon l'une des revendications 1 à 3 **caractérisé en ce qu'il** fonctionne comme système ouvert, la soufflante de séchage (1) étant reliée du côté de l'entrée directement ou par l'intermédiaire d'un dispositif de refroidissement (5) au milieu ambiant, et que la sortie de la chambre ou du récipient à produit sec est reliée au milieu ambiant.

5. Dispositif selon la revendication 4 **caractérisé en ce que** dans la sortie d'air de la cartouche de séchage (3) ou (4) est disposé un palpeur de température au moyen duquel est initiée la commutation de la phase de chauffage en la phase de refroidissement de régénération, au processus de commutation étant associé un moyen de ralentissement qui maintient la phase de chauffage pendant quelque minutes après avoir atteint la température de chauffage prescrite.

6. Dispositif selon les revendications 4 ou 5 **caractérisé en ce que** après avoir atteint la température de refroidissement prescrite, la cartouche de séchage (3) ou (4) peut être fermée hermétiquement à l'entrée et à la sortie par des coulisseaux ou des moyens de fermeture similaires.

7. Dispositif selon l'une des revendications 1 à 6 **caractérisé en ce que** lors du processus de séchage, le volume de la cartouche de séchage (3) ou (4), remplie complètement ou presque de siccatif, est accordé de telle sorte avec la quantité d'air passant par heure qu'au moins un volume de un litre de la cartouche de séchage soit disponible par mètre cube d'air passant par heure.

8. Procédé de séchage et de chauffage d'air pour sécher des substances solides, en particulier au moyen d'un dispositif conforme aux revendications 1 à 7, où le flux d'air nécessaire au séchage est successivement introduit dans une cartouche de séchage (3) ou (4) par une soufflante de séchage (1), chauffé à la sortie de la cartouche (3) ou (4), introduit dans une chambre à produit sec (17), refroidi à la sortie de la chambre à produit sec (17), puis amené de nouveau vers la soufflante de séchage (1) étant précisé que
- l'air est refroidi après sa sortie de la soufflante de séchage et avant son entrée dans la cartouche de séchage (3) ou (4),
- en vue de la régénération de la cartouche de séchage (3) ou (4), de l'air ambiant est aspiré dans la cartouche (3) ou (4) par un radiateur aspirant de refroidissement (8) avec un séparateur de condensat et introduit dans le dispositif de chauffage par une soufflante (2), l'air chauffé étant introduit dans la cartouche de séchage (3) ou (4) et rejeté dans le milieu ambiant à la sortie de la cartouche de séchage (3) ou (4),
- après avoir atteint la température de réactivation, ce circuit ouvert est commuté en circuit fermé de refroidissement en vue du refroidissement de la cartouche (3) ou (4) déjà régénérée, l'air sortant de la cartouche (3) ou (4) étant aspiré par la soufflante (2) fermée au milieu ambiant,
- le flux d'air quittant la cartouche de séchage (3) ou (4) est refroidi en amont de la soufflante et le chauffage est arrêté dans le dispositif de chauffage au début de la phase de refroidissement.

9. Procédé selon la revendication 8 **caractérisé en ce que** l'air sortant de la soufflante de séchage (1) est refroidi avant l'entrée dans la cartouche de séchage (3) ou (4) à une température inférieure à 30° C.

10. Procédé selon les revendications 8 ou 9 **caractérisé en ce que** l'air sortant de la cartouche de séchage est d'abord filtré, puis refroidi avant d'atteindre la soufflante de séchage (1).

11. Procédé selon l'une des revendications 8 à 10 **caractérisé en ce que** l'air ambiant est aspiré, directement ou après avoir été refroidi, par la soufflante de séchage (1) et l'air sortant de la soufflante de séchage (1) est rejeté vers le milieu ambiant.

12. Procédé selon la revendication 11 **caractérisé en ce que** la température de l'air est mesurée à la sortie de la cartouche de séchage (3) ou (4) et qu'après avoir atteint une température prescrite dans le circuit ouvert en phase de régénération, ce dernier est commuté en circuit fermé de refroidissement en fonction de la température mesurée, la commutation s'effectuant avec un retard de quelque minutes après avoir atteint la température indiquant la régénération.

13. Procédé selon les revendications 11 ou 12 **caractérisé en ce que** la température de refroidissement est mesurée à la sortie de la cartouche de séchage (3) ou (4) et que ladite cartouche de séchage (3) ou (4) est fermée hermétiquement lorsque cette température est atteinte jusqu'à être commutée de nouveau dans le circuit de séchage.

14. Procédé selon l'une des revendications 8 à 13 **caractérisé en ce que** le volume de la cartouche de séchage (3) ou (4) remplie de siccatif est accordé de telle sorte avec la quantité d'air traversant par heure lors du processus de séchage qu'au moins un litre de siccatif est disponible par mètre cube et par heure.
